# EUROPEAN PATENT APPLICATION

(11) **EP 4 147 816 A1**
(43) Date of publication of application: **15.03.2023**
(21) Application number: 21822642.1
(22) Date of filing: 04.06.2021
(51) Int. Cl.: B23K 26/356

(54) **MANUFACTURING METHOD OF PROCESSED ARTICLE, PROCESSED PRODUCT AND PROCESSING DEVICE**

(30) Priority: 08.06.2020 JP 2020099271
(71) Applicant: Hamamatsu Photonics K.K., Hamamatsu-shi, Shizuoka 435-8558 (JP)
(72) Inventor: KURITA, Takashi, Hamamatsu-shi, Shizuoka 435-8558 (JP); WATARI, Takeshi, Hamamatsu-shi, Shizuoka 435-8558 (JP); KABEYA, Yuki, Hamamatsu-shi, Shizuoka 435-8558 (JP); YOSHIMURA, Ryo, Hamamatsu-shi, Shizuoka 435-8558 (JP)
(74) Representative: Grünecker Patent- und Rechtsanwälte PartG mbB
(86) International application number: PCT/JP2021/021396
(87) International publication number: WO 2021/251296

(57) **Abstract**

A processed product manufacturing method includes preparing a workpiece 10 containing metal and forming a plurality of first regions α and a second region β along a surface 10a of the workpiece 10 by the irradiation of a laser beam L. The first regions α are applied with a tensile residual stress. In the second region β applied with a compressive residual stress, a plurality of irradiation points P separated from each other in the surface 10a of the workpiece 10 are irradiated with the laser beam L. The first regions α are formed to be separated from each other and each of the first regions α is surrounded by the second region β when viewed from a direction orthogonal to the surface 10a.

## Description

### Technical Field

The present invention relates to a processed product manufacturing method, a processed product, and a processing device.

### Background Art

A laser peening process for processing a surface of a workpiece containing metal is known (for example, Patent Literature 1). In Patent Literature 1, a compressive residual stress is applied to the workpiece by irradiating the surface of the workpiece with a laser beam.

### Citation List

### Patent Literature

Patent Literature 1: U.S. Patent Application Publication No. 2003/0024915

### Summary of Invention

### Technical Problem

Plastic deformation can occur in the workpiece by irradiating the workpiece with the laser beam. This plastic deformation applies a compressive residual stress to the workpiece. Due to the application of the compressive residual stress, the strength of the workpiece is improved. However, when plastic deformation occurs in the workpiece, a metal flow occurs in the periphery of a region in which plastic deformation occurs. Due to the accumulation of the influence by the metal flow, a processed product subjected to the laser peening process is bent.

One aspect of the present invention is to provide a processed product manufacturing method capable of improving surface strength and suppressing bending. Another aspect of the present invention is to provide a processed product capable of improving surface strength and suppressing bending. Still another aspect of the present invention is to provide a processing device capable of improving surface strength of a processed product and suppressing bending of a processed product.

### Solution to Problem

A processed product manufacturing method of one aspect of the present invention includes: preparing a workpiece containing metal; and forming a plurality of first regions and a second region along a surface of the workpiece by the irradiation of a laser beam. A tensile residual stress is applied to the plurality of first regions. A compressive residual stress is applied to the second region. The laser beam irradiates the plurality of irradiation points separated from each other in the surface of the workpiece. The first regions are formed to be separated from each other and each of the first regions is surrounded by the second region when viewed from a direction orthogonal to the surface.

In the one aspect, the first regions applied with the tensile residual stress are formed to be separated from each other and each of the first regions is surrounded by the second region applied with the compressive residual stress when viewed from a direction orthogonal to the surface. In this case, the surface strength can be improved by the compressive residual stress and the bending due to the influence of the first region applied with the tensile residual stress can be suppressed. Thus, it is possible to manufacture a processed product having improved surface strength and suppressing bending.

In the one aspect, the laser beam may irradiate the plurality of irradiation points so that a plastic deformation region formed by plastic deformation is formed at a position corresponding to each of the irradiation points. The plastic deformation region corresponding to each of the irradiation points may be formed not to overlap an adjacent plastic deformation region. In this case, the bending of the processed product is further suppressed.

In the one aspect, the laser beam may irradiate the irradiation points so that a metal flow region formed by a metal flow is formed at a position corresponding to each of the irradiation points. The metal flow region corresponding to each of the irradiation points may be irradiated to overlap an adjacent metal flow region. In this case, since a metal flow occurs in a facing direction in the adjacent metal flow regions, the compressive residual stress between the adjacent irradiation points is further improved.

In the one aspect, the irradiation points may be simultaneously irradiated with the laser beam. In this case, a metal flow due to the irradiation of the laser beam simultaneously occurs at a position corresponding to each of the irradiation points. Since a metal flow simultaneously occurs in a facing direction in the adjacent metal flow regions, the compressive residual stress between the adjacent irradiation points is further improved. Further, the influence due to the metal flow in each metal flow region is canceled by the metal flow in the adjacent metal flow region. Therefore, the bending of the processed product due to the metal flow is suppressed.

In the one aspect, the workpiece may contain at least one of titanium and a titanium alloy. In this case, the thermal conductivity of the workpiece is suppressed. As a result, the ratio of the first region applied with the tensile residual stress with respect to the second region applied with the compressive residual stress is balanced.

A processed product according to another aspect of the present invention includes a processed portion. The processed portion contains metal and the first regions applied with the tensile residual stress and the second region applied with the compressive residual stress are formed along the surface. The first regions are arranged to be separated from each other and each of the first regions is surrounded by the second region when viewed from a direction orthogonal to the surface.

In the another aspect, the first regions applied with the tensile residual stress are separated from each other and each of the first regions is surrounded by the second region applied with the compressive residual stress when viewed from a direction orthogonal to the surface. In this case, the surface strength can be improved by the compressive residual stress and the bending can be suppressed by the influence of the first region applied with the tensile residual stress.

In the another aspect, the processed portion may include plastic deformation regions formed at positions corresponding to the plurality of first regions by plastic deformation when viewed from a direction orthogonal to the surface. The plastic deformation region corresponding to each of the first regions may be formed not to overlap an adjacent plastic deformation region. In this case, the processed product having improved surface strength is easily provided.

In the another aspect, the processed portion may include metal flow regions formed at positions corresponding to the first regions by a metal flow when viewed from a direction orthogonal to the surface. The metal flow region corresponding to each of the first regions may be formed to overlap an adjacent metal flow region. In this case, the processed product having further improved compressive residual stress in the surface is provided.

In the another aspect, the processed portion may contain at least one of titanium and a titanium alloy. In this case, the ratio of the first region applied with the tensile residual stress with respect to the second region applied with the compressive residual stress is balanced.

A processing device according to still another aspect of the present invention includes a laser emission unit, a position adjustment unit, and a control unit. The laser emission unit is configured to emit a laser beam to irradiate a surface of a workpiece containing metal. The position adjustment unit is configured to adjust a position irradiated with the laser beam in the surface. The control unit is configured to control at least one of the laser emission unit and the position adjustment unit to perform a laser peening process. In the laser peening process, the first regions applied with the tensile residual stress and the second region applied with the compressive residual stress are formed along the surface by the irradiation of the laser beam. The irradiation points separated from each other in the surface are irradiated with the laser beam. The control unit is configured to control at least one of the laser emission unit and the position adjustment unit so that the first regions are separated from each other and each of the first regions is surrounded by the second region when viewed from a direction orthogonal to the surface.

In the still another aspect, the control unit is configured to control at least one of the laser emission unit and the position adjustment unit so that the first regions are separated from each other and each of the first regions is surrounded by the second region when viewed from a direction orthogonal to the surface. In this case, the surface strength can be improved by the compressive residual stress and the bending can be suppressed by the influence of the first region applied with the tensile residual stress.

In the still another aspect, the control unit may be configured to control at least one of the laser emission unit and the position adjustment unit so that a plastic deformation region is formed at a position corresponding to each of the irradiation points by plastic deformation due to the irradiation of the laser beam to the irradiation points and the plastic deformation region corresponding to each of the irradiation points does not overlap an adjacent plastic deformation region. In this case, the bending of the processed product is further suppressed.

In the still another aspect, the control unit may be configured to control at least one of the laser emission unit and the position adjustment unit so that a metal flow region is formed at a position corresponding to each of the irradiation points by a metal flow due to the irradiation of the laser beam to the irradiation points and the metal flow region corresponding to each of the irradiation points overlaps an adjacent metal flow region. In this case, a metal flow occurs in a facing direction in the adjacent metal flow regions. Therefore, distortion due to the metal flow interferes between the adjacent irradiation points. As a result, the compressive residual stress between the adjacent irradiation points is further improved.

In the still another aspect, the control unit may be configured to control at least one of the laser emission unit and the position adjustment unit so that the irradiation points are simultaneously irradiated with a laser beam. In this case, a metal flow due to the irradiation of the laser beam simultaneously occurs at a position corresponding to each of the irradiation points. Therefore, forces caused by the metal flow are canceled.

In the still another aspect, the control unit may further include an acquisition unit and a determination unit. The acquisition unit may be configured to acquire information on a residual stress distribution applied to a workpiece by the irradiation of a laser beam. The determination unit may be configured to determine, based on the information acquired by the acquisition unit, an irradiation point irradiated with a laser beam. In this case, this processing device can perform a laser peening process according to information set in advance. As a result, this processing device can easily provide a configuration in which the plurality of first regions are separated from each other.

### Advantageous Effects of Invention

One aspect of the present invention provides a processed product manufacturing method capable of improving surface strength and suppressing bending. Another aspect of the present invention provides a processed product capable of improving surface strength and suppressing bending. Still another aspect of the present invention provides a processing device capable of improving surface strength of a processed product and suppressing bending of the processed product.

### Brief Description of Drawings

FIG. 1 is a schematic block diagram illustrating a configuration of a processing device of this embodiment.
FIG. 2A is a plan view illustrating a structure of a processed product and FIG. 2B is a cross-sectional view illustrating a structure of the processed product.
FIG. 3 is a schematic block diagram illustrating a configuration of a processing device of a modified example of this embodiment.
FIG. 4 is a flowchart illustrating a processed product manufacturing method.
FIG. 5 is a diagram illustrating the irradiation of a laser beam.
FIG. 6 is a diagram illustrating multiple irradiations of a laser beam.
FIG. 7 is a flowchart illustrating a method of creating data set.
FIG. 8 is a diagram illustrating a residual stress distribution when one irradiation point of a workpiece is irradiated with a laser beam.
FIGS. 9A and 9B are diagrams illustrating an estimated two-dimensional residual stress distribution.
FIGS. 10A and 10B are diagrams illustrating a combined residual stress distribution.
FIG. 11 is a diagram illustrating a state in which a workpiece is bent by the irradiation of a laser beam in the related art.
FIG. 12 is a diagram illustrating the irradiation of a laser beam in a manufacturing method of a modified example of this embodiment.

### Description of Embodiments

Hereinafter, an embodiment of the present invention will be described with reference to the accompanying drawings. Additionally, in the description, the same reference numerals are used for the same elements or elements having the same function, and overlapping descriptions are omitted.

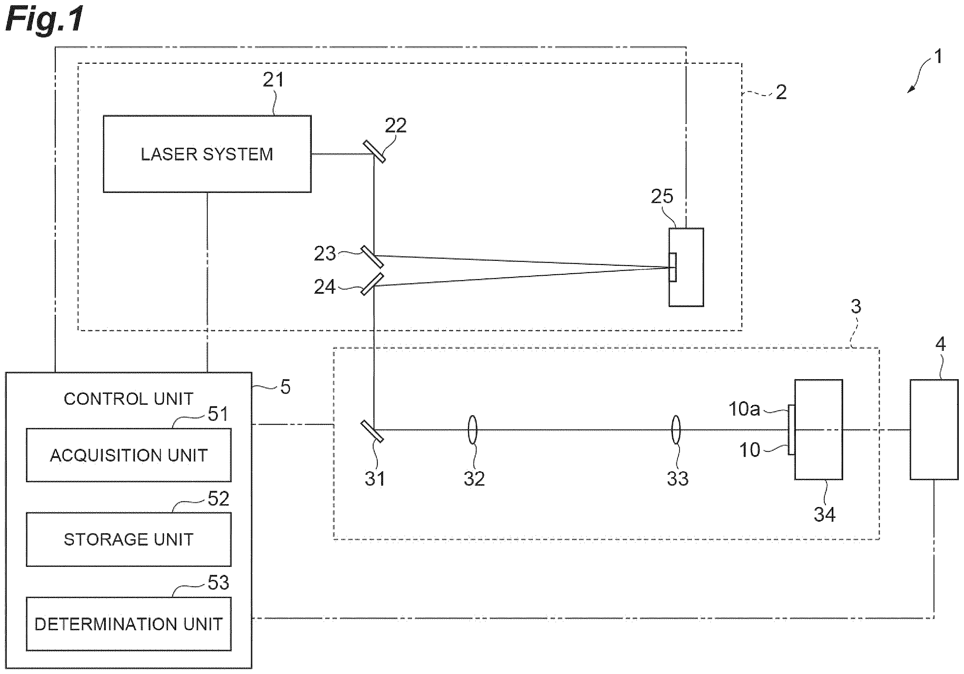

First, a configuration of a processing device of this embodiment will be described with reference to FIG. 1. FIG. 1 is a schematic block diagram illustrating a configuration of the processing device of this embodiment.

A processing device 1 performs a laser peening process on a surface 10a of a workpiece 10. By the laser peening process of the processing device 1, a desired residual stress distribution is formed along the surface 10a. The thermal conductivity of the workpiece 10 is equal to or smaller than, for example, 20 W/m·K. The workpiece 10 contains metal. The workpiece 10 contains, for example, at least one of titanium and a titanium alloy. The surface 10a is made of metal. The surface 10a is made of, for example, at least one of titanium and a titanium alloy. In this embodiment, the workpiece 10 is made of, for example, titanium. The processing device 1 includes a laser emission unit 2, a position adjustment unit 3, a stress measurement unit 4, and a control unit 5.

The laser emission unit 2 emits a laser beam that irradiates the surface 10a of the workpiece 10. In this embodiment, the laser emission unit 2 adjusts the output energy of the emitted laser beam and the wavefront shape of the emitted laser beam according to instructions from the control unit 5. The laser emission unit 2 includes, for example, a laser system 21, mirrors 22, 23, and 24, and a spatial light phase modulation unit 25.

The laser system 21 emits a laser beam. The wavelength of the laser beam emitted by the laser system 21 is, for example, 500 nm to 1500 nm. The output energy of the laser beam emitted by the laser system 21 is, for example, 0.1 J to 1000 J. In this embodiment, the laser system 21 adjusts the output energy of the emitted laser beam according to the instructions from the control unit 5. The output energy of the laser beam emitted from the laser system 21 is determined based on the setting of the spatial light phase modulation unit 25.

The laser beam emitted from the laser system 21 is reflected by the mirrors 22 and 23 and is guided to the spatial light phase modulation unit 25. The laser beam emitted from the spatial light phase modulation unit 25 is reflected by the mirror 24 and is guided to the position adjustment unit 3.

The spatial light phase modulation unit 25 adjusts the wavefront shape of the laser beam emitted from the laser emission unit 2. The spatial light phase modulation unit 25 includes, for example, a reflective spatial light phase modulator that modulates the phase of incident laser beam. In this embodiment, the spatial light phase modulation unit 25 phase-modulates the incident laser beam with the liquid crystal according to the instructions from the control unit 5, and sets the wavefront shape of the emitted laser beam. In other words, the spatial light phase modulation unit 25 shapes the laser beam emitted from the laser emission unit 2 into a laser beam having a desired beam pattern according to the instructions from the control unit 5. For example, the spatial light phase modulation unit 25 shapes the beam pattern of the laser beam emitted from the laser emission unit 2 so that a plurality of irradiation points in the surface 10a of the workpiece 10 are simultaneously irradiated with the laser beam.

"Simultaneous irradiation" means the irradiation at overlapping times. The start and end of irradiation to multiple irradiation points may not be strictly coincident. Hereinafter, the simultaneous irradiation to a plurality of irradiation points is referred to as "one irradiation". In this embodiment, multiple irradiations are performed by moving the irradiation point of the laser beam on the surface 10a. The output energy of the laser beam emitted from the laser system 21 is determined according to the wavefront shape of the laser beam emitted from the laser emission unit 2. For example, the output energy of the laser beam emitted from the laser system 21 becomes larger as the number of the irradiation points on the surface 10a irradiated with the laser beam becomes larger.

The position adjustment unit 3 adjusts the irradiation point of the laser beam to the surface 10a of the workpiece 10. In this embodiment, the position adjustment unit 3 adjusts a position in which the workpiece 10 is irradiated with the laser beam emitted from the laser emission unit 2 according to the instructions of the control unit 5. The position adjustment unit 3 adjusts the irradiation point of the laser beam on the workpiece 10 by relatively moving the laser beam and one workpiece 10. The position adjustment unit 3 includes, for example, a mirror 31, an imaging lens 32, a condenser lens 33, and a drive unit 34.

The mirror 31 reflects the laser beam emitted from the laser emission unit 2 and guides the laser beam to the imaging lens 32 and the condenser lens 33. The imaging lens 32 and the condenser lens 33 irradiates the surface 10a of the workpiece 10 with the laser beam having a desired wavefront shape adjusted by the spatial light phase modulation unit 25. In other words, the image of the beam pattern adjusted by the spatial light phase modulation unit 25 is formed on the surface 10a by the imaging lens 32 and the condenser lens 33.

The drive unit 34 relatively moves at least one of the workpiece 10 and the laser beam emitted from the laser emission unit 2. In this embodiment, the drive unit 34 drives the mirror 31, the imaging lens 32, the condenser lens 33, and the workpiece 10 according to the instructions of the control unit 5. For example, the drive unit 34 moves the workpiece 10 for each irradiation when one workpiece 10 is irradiated a plurality of times. For example, the drive unit 34 includes a robot arm or a movable stage that moves the workpiece 10.

The stress measurement unit 4 measures the information on the residual stress applied to the workpiece 10. In this embodiment, the stress measurement unit 4 outputs the measured information to the control unit 5. The processing device 1 may not include the stress measurement unit 4. The stress measurement unit 4 is, for example, an AE (Acoustic Emission) measuring instrument. The AE measuring instrument detects elastic waves generated in the workpiece 10 by the laser peening process. As a modified example of this embodiment, the stress measurement unit 4 may be a laser Doppler vibrometer. When the laser Doppler vibrometer is used as the stress measurement unit 4, for example, the workpiece 10 is irradiated with a measurement laser beam and the measurement laser beam reflected in the workpiece 10 is detected. Accordingly, a force applied to the workpiece 10 is measured in a noncontact manner. The AE measuring instrument can repeatedly measure the residual stress in a shorter period of time than the laser Doppler vibrometer.

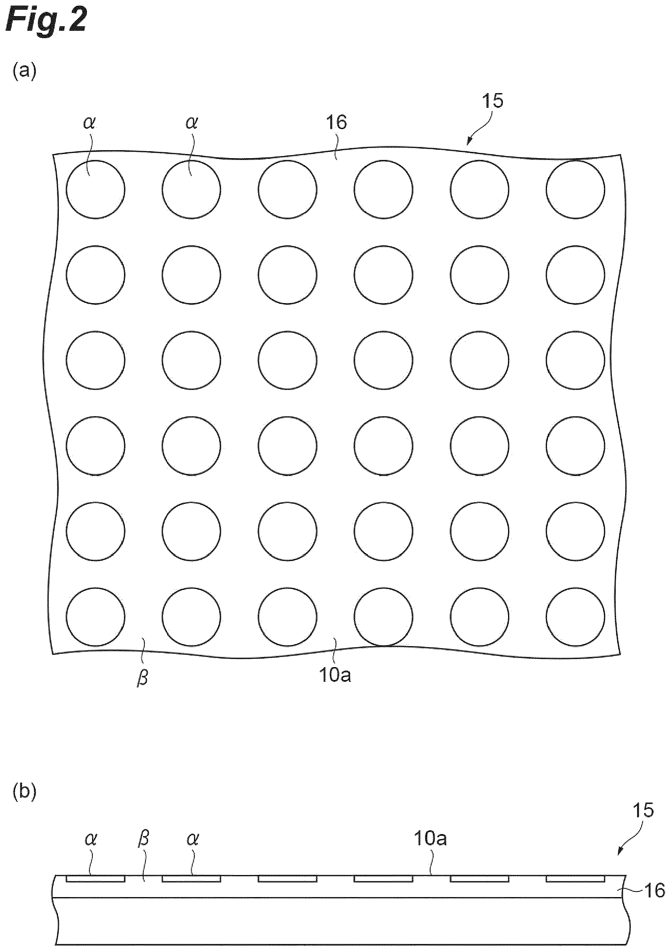

The control unit 5 controls at least one of the laser emission unit 2 and the position adjustment unit 3 and performs the laser peening process on the workpiece 10. In this laser peening process, the surface 10a of the workpiece 10 is irradiated with the laser beam. By the laser peening process, a processed product 15 illustrated in FIGS. 2A and 2B is manufactured. FIG. 2A illustrates the residual stress distribution when viewed from a direction orthogonal to the surface 10a. FIG. 2B illustrates the residual stress distribution in a cross-section orthogonal to the surface 10a. The processed product 15 includes a processed portion 16 having the surface 10a subjected to the laser peening process. For example, the control unit 5 feedback-controls at least one of the laser emission unit 2 and the position adjustment unit 3, based on the information measured by the stress measurement unit 4. The control unit 5 is, for example, a microcomputer.

The control unit 5 controls at least one of the laser emission unit 2 and the position adjustment unit 3 so that a plurality of first regions α applied with a tensile residual stress and a second region β applied with a compressive residual stress are formed along the surface 10a by the irradiation of the laser beam to the surface 10a. At this time, the control unit 5 controls at least one of the laser emission unit 2 and the position adjustment unit 3 so that the first regions α are separated from each other and each of the first regions is surrounded by the second region β when viewed from a direction orthogonal to the surface 10a. Each of a plurality of irradiation points in the surface 10a is irradiated with the laser beam by the laser emission unit 2 and the position adjustment unit 3. The control unit 5 instructs a beam pattern of the emitted laser beam to the laser emission unit 2 so that the first region α and the second region β are formed.

The control unit 5 includes an acquisition unit 51, a storage unit 52, and a determination unit 53. The acquisition unit 51 acquires various types of information used in the laser peening process. The acquisition unit 51 acquires various types of information from at least one of the outside of the control unit 5 and the storage unit 52. The acquisition unit 51 acquires, for example, a material contained in the workpiece 10, the information on the residual stress distribution applied to the workpiece 10 by the irradiation of the laser beam, the information on the laser beam to irradiate the workpiece 10, and the measurement value measured by the stress measurement unit 4. The information on the residual stress distribution applied to the workpiece 10 includes, for example, the compressive residual stress value applied to the workpiece 10, the irradiation point of the laser beam on the surface 10a, the area of the region irradiated by the laser beam on the surface 10a for each irradiation, the arrangement of the plurality of irradiation points irradiated with the laser beam, and the area of each irradiation point irradiated with the laser beam. The information on the laser beam to irradiate the workpiece 10 includes, for example, a parameter set to the laser emission unit 2. The parameter set to the laser emission unit 2 includes, for example, the output energy of the laser beam emitted from the laser system 21 and the wavefront shape of the laser beam output from the spatial light phase modulation unit 25.

The storage unit 52 stores various types of information used in the laser peening process. The storage unit 52 stores, for example, information acquired from the acquisition unit 51 and information acquired in advance. The information acquired in advance includes, for example, information obtained by associating information on the residual stress distribution applied to the workpiece 10 and information on the laser beam to irradiate the workpiece 10. For example, the storage unit 52 stores information obtained by associating information on the residual stress distribution applied to the workpiece 10 and information set to the laser emission unit 2, in advance.

The determination unit 53 sets a parameter set to the laser emission unit 2, based on the information acquired by the acquisition unit 51. The determination unit 53 sets the parameter associated with the information on the residual stress distribution acquired by the acquisition unit 51 to the laser emission unit 2 by referring to, for example, the storage unit 52. The determination unit 53 determines the parameter set to the position adjustment unit 3, based on the information acquired by the acquisition unit 51. For example, the determination unit 53 determines the irradiation point of the laser beam on the surface 10a, based on the information on the residual stress distribution acquired by the acquisition unit 51.

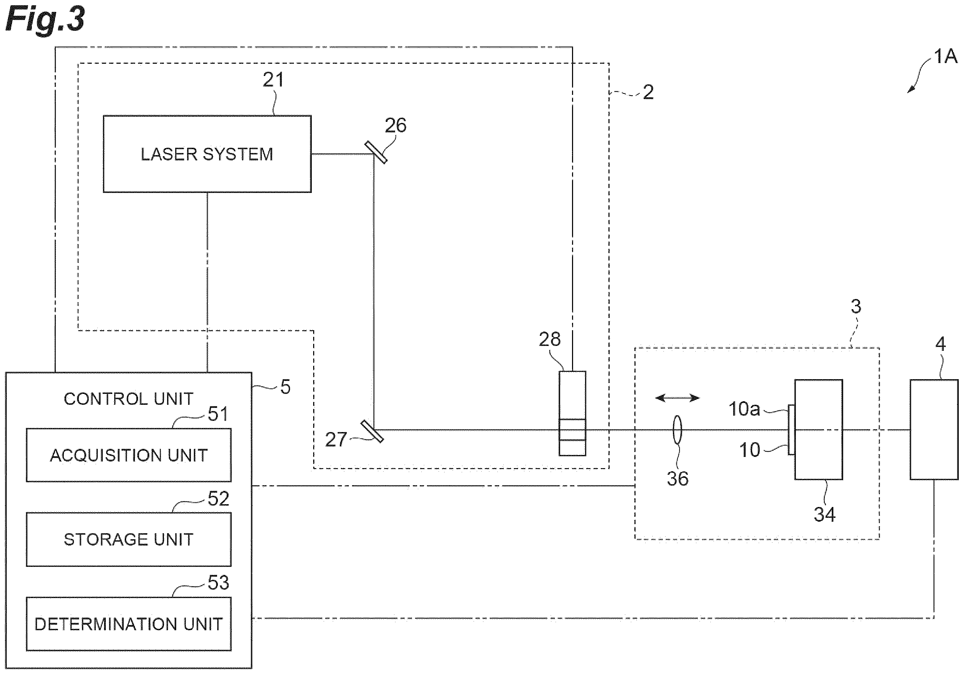

Next, a processing device of a modified example of this embodiment will be described with reference to FIG. 3. FIG. 3 is a schematic block diagram illustrating a configuration of the processing device of the modified example of this embodiment. This modified example is generally similar or the same as the above-described embodiment. This modified example is different from the above-described embodiment in that a light diffraction unit 28 is provided instead of the spatial light phase modulation unit 25. Differences between the above-described embodiment and modified example will be mainly described below.

In this modified example, the laser emission unit 2 includes the laser system 21, mirrors 26 and 27, and the light diffraction unit 28. The laser beam emitted from the laser system 21 is reflected by the mirror 26 and the mirror 27 and is guided to the light diffraction unit 28. The laser beam emitted from the light diffraction unit 28 is guided to the position adjustment unit 3. The position adjustment unit 3 includes a lens 36 and the drive unit 34. The laser beam incident to the position adjustment unit 3 is to irradiate the surface 10a of the workpiece 10 through the lens 36. In this modified example, the drive unit 34 drives the lens 36 and the workpiece 10 according to the instructions of the control unit 5.

The light diffraction unit 28 diffracts the incident laser beam and shapes the laser beam into the laser beam having a desired beam pattern. The light diffraction unit 28 includes, for example, a diffractive optical element. The laser beam incident to the light diffraction unit 28 is diffracted in the diffractive optical element. The laser beam branched by the light diffraction unit 28 irradiates each of the plurality of irradiation points on the surface 10a of the workpiece 10 through the lens 36. In other words, each laser beam branched by the light diffraction unit 28 irradiates the corresponding irradiation point of the surface 10a.

In this modified example, the light diffraction unit 28 includes a plurality of diffractive optical elements that shape the incident laser beam into different beam patterns. The light diffraction unit 28 switches the diffractive optical elements arranged on the optical path according to the instructions of the control unit 5. For example, the light diffraction unit 28 switches the diffractive optical elements arranged on the optical path using an electric revolver. For example, the laser beam reflected by the mirrors 26 and 27 is transmitted through the diffractive optical elements arranged on the optical path and is guided to the lens 36.

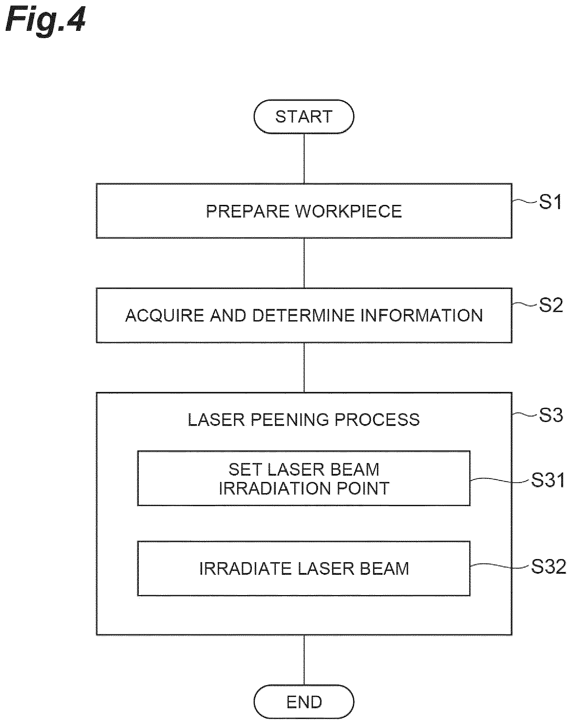

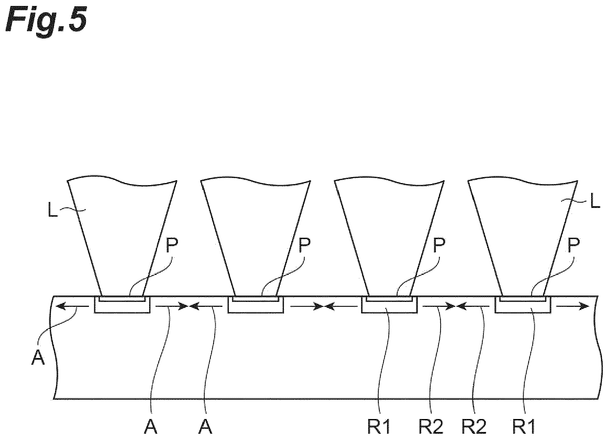

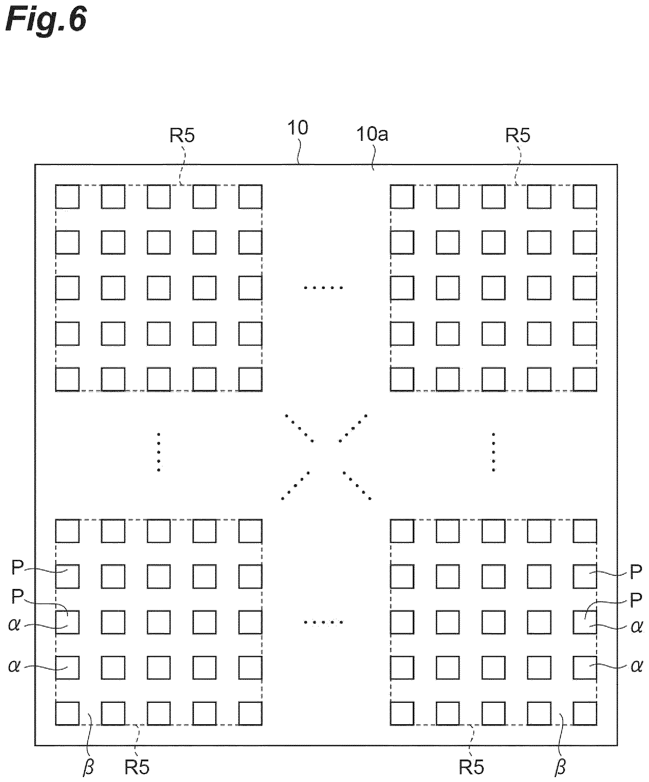

Next, an example of a processed product manufacturing method will be described with reference to FIGS. 4 to 6. FIG. 4 is a flowchart illustrating the processed product manufacturing method. FIG. 5 is a diagram illustrating the irradiation of the laser beam. FIG. 6 is a diagram illustrating multiple irradiations of the laser beam.

First, the workpiece 10 containing metal is prepared (step S1). For example, the workpiece 10 is disposed on the movable stage included in the drive unit 34. At this time, the workpiece 10 is disposed so that the surface 10a is irradiated with the laser beam. In this embodiment, the surface 10a of the workpiece 10 in step S1 is made of metal and is exposed. The surface 10a is made of, for example, at least one of titanium and a titanium alloy.

Next, the control unit 5 acquires various types of information used in the laser peening process and determines the information instructed to the laser emission unit 2 and the position adjustment unit 3 (step S2). The control unit 5 acquires information from the outside of the control unit 5 and the storage unit 52 by the acquisition unit 51. The information acquired from the outside of the control unit 5 is, for example, information input by a user. The control unit 5 acquires, for example, the material contained in the workpiece 10, information on the residual stress distribution applied to the workpiece 10 by the irradiation of the laser beam, and the information on the laser beam to irradiate the workpiece 10 in the acquisition unit 51. The control unit 5 determines a parameter set to the laser emission unit 2 and the position adjustment unit 3, based on the information acquired by the acquisition unit 51 in the determination unit 53. The determination unit 53 determines, for example, the output energy of the laser beam emitted from the laser system 21 and the beam pattern shaped by the spatial light phase modulation unit 25, based on the information acquired by the acquisition unit 51. When the light diffraction unit 28 is used instead of the spatial light phase modulation unit 25, the determination unit 53 may determine an optical diffraction element disposed on the optical path.

Next, the control unit 5 controls at least one of the laser emission unit 2 and the position adjustment unit 3 to perform the laser peening process (step S3). For example, the determination unit 53 instructs the setting of the irradiation point P of the laser beam L to the position adjustment unit 3, based on the parameter determined in step S2 (step S31). Next, the determination unit 53 instructs the emission of the laser beam to the laser emission unit 2, based on the parameter determined in step S2 (step S32).

In the laser peening process, the plurality of irradiation points P are irradiated with the laser beam L as illustrated in FIG. 5. The laser spot of the laser beam L is located at each irradiation point P. The laser beam emitted from the laser emission unit 2 is guided to the position adjustment unit 3 and irradiates each irradiation point P set in step S31. In this embodiment, the laser spot of the laser beam L is located at each irradiation point P of the surface 10a. The plurality of irradiation points P are located on the surface 10a in a matrix shape. A plasma confinement layer may be provided on the surface 10a for confining plasma generated by ablation during laser irradiation by running water or the like and transmitting the impact to the workpiece.

In step S3, the plurality of irradiation points P are simultaneously irradiated with the laser beam L by, for example, the control of the control unit 5. For example, in step S32, the laser emission unit 2 shapes the beam pattern of the emitted laser beam so that the plurality of irradiation points P separated from each other on the surface 10a of the workpiece 10 are simultaneously irradiated with the laser beam L in the spatial light phase modulation unit 25.

In step S3, the control unit 5 controls at least one of the laser emission unit 2 and the position adjustment unit 3 so that a plastic deformation region R1 is formed at a position corresponding to each irradiation point P by the plastic deformation due to the irradiation of the laser beam L to the plurality of irradiation points P. The plastic deformation is caused by the dislocation of metal crystals due to the application of pressure exceeding the yield stress due to shock waves caused by laser irradiation. Metal crystals are dislocated in the plastic deformation region R1, and compressive stress is applied thereto. Stress exceeding the yield stress is applied to the plastic deformation region R1. In this embodiment, the control unit 5 controls at least one of the laser emission unit 2 and the position adjustment unit 3 so that the plastic deformation region R1 corresponding to each irradiation point P does not overlap the adjacent plastic deformation region R1. The plurality of irradiation points P are irradiated with the laser beam L so that the plastic deformation region R1 formed by the plastic deformation is formed at each irradiation point P. As a result, the plastic deformation region R1 corresponding to each irradiation point P is formed not to overlap the adjacent plastic deformation region R1.

In step S3, the control unit 5 controls at least one of the laser emission unit 2 and the position adjustment unit 3 so that a metal flow region R2 is formed at a position corresponding to each irradiation point P by the metal flow due to the irradiation of the laser beam L to the plurality of irradiation points P. In the metal flow, a crystal flow occurs without dislocations. The crystal flow without dislocation is blocked by surrounding stationary metal, which causes elastic strain. Compressive stress is applied to the metal flow region R2 by this elastic strain. In this embodiment, the control unit 5 controls at least one of the laser emission unit 2 and the position adjustment unit 3 so that the metal flow region R2 corresponding to each irradiation point P overlaps the adjacent metal flow region R2. The plurality of irradiation points P are irradiated with the laser beam L so that the metal flow region R2 formed by the metal flow is formed at each irradiation point P. The metal flow occurs around the plastic deformation region R1. As a result, the metal flow region R2 corresponding to each irradiation point P is formed to overlap the adjacent metal flow region R2. When the adjacent metal flow regions R2 overlap each other, elastic strains interfere with each other. Therefore, a higher compressive stress can be obtained.

By the irradiation of the laser beam L to the plurality of irradiation points P, the plurality of first regions α applied with the tensile residual stress and the second region β applied with the compressive residual stress are formed along the surface 10a as illustrated in FIGS. 2A and 2B. The first region α is formed at a position corresponding to each irradiation point P. The first region α is formed in a region right below the laser spot formed on the surface 10a of the workpiece 10. The first region α is formed in a region extending in the thickness direction of the workpiece 10 from the laser spot on the surface 10a. The edge of the first region α of the surface 10a is formed along the edge of the laser spot formed on the surface 10a. The maximum width of the first region α is the same as the maximum width of the laser spot on the surface 10a. The "same" includes a margin of error. The "maximum width" is a value of the longest portion in a direction parallel to the surface 10a in each first region α or each laser spot. For example, the laser spot of the surface 10a is circular and the maximum width of the laser spot is the maximum diameter of the laser spot. The first region α may be formed to be slightly large to include the laser spot or may be formed to be slightly small to be included in the laser spot when viewed from a direction orthogonal to the surface 10a.

The tensile residual stress in each first region α is formed, for example, when a portion melted by the irradiation of the laser beam L is solidified. The compressive residual stress in the second region β is formed by, for example, plastic deformation due to the irradiation of the laser beam L and compression due to the metal flow. The second region β includes the plastic deformation region R1 and the metal flow region R2. The arrow A indicates the metal flow direction. Due to the irradiation of the laser beam L to the adjacent irradiation points P, a metal flow occurs in the facing direction. Even in this case, a compressive residual stress occurs. The second region β is formed around each first region α. When viewed from a direction orthogonal to the surface 10a, the first regions α are formed to be separated from each other and to be surrounded by the second region β. By adjusting the irradiation interval of the laser beam L, the residual stress value in the second region β is adjusted.

In this embodiment, step S31 and step S32 are repeated a plurality of times. In other words, the surface 10a of the workpiece 10 is irradiated with the laser beam a plurality of times. In step S32, the control unit 5 determines whether or not to end the laser peening process after the irradiation of the irradiation point P set in step S31. When it is determined that the laser peening process ends, step S3 ends. When it is determined that the laser peening process does not end, step S31 and step S32 are performed again.

FIG. 6 illustrates an example of the irradiation point of the laser beam to the surface 10a when the surface 10a is irradiated with the laser beam a plurality of times. For each irradiation, the plurality of irradiation points P in one unit region R5 are simultaneously irradiated with the laser beam L. The position of the unit region R5 is determined by the determination unit 53 in step S31. In FIG. 6, the unit region R5 is indicated by a dashed line. For example, when step S31 and step S32 are performed a plurality of times, the plurality of unit regions R5 are irradiated with the laser beam. The determination unit 53 determines the size of the unit region R5, based on the information on the residual stress distribution acquired by the acquisition unit 51. For example, several to tens of thousands of first regions α are formed along the surface 10a by multiple irradiations of the laser beam.

In this embodiment, when the area of the unit region R5 in the surface 10a is S₁, the area of one irradiation point P irradiated with the laser beam L is S₂, and the number of the irradiation points P irradiated in the unit region R5 by one irradiation is N, (N × S₂/S₁) < 0.5 is established. In other words, the total area of the irradiation points P irradiated with the laser beam L in one unit region R5 is smaller than half the area of one unit region R5. In this case, the ratio of the area of the second region β applied with the compressive residual stress in the unit region R5 in the surface 10a is improved.

As described above, the processed product 15 is manufactured. The processed product 15 includes the processed portion 16 with the surface 10a. The thermal conductivity of the processed portion 16 is equal to or smaller than, for example, 20 W/m·K. The processed portion 16 contains metal. For example, the processed portion 16 contains at least one of titanium and a titanium alloy. As illustrated in FIGS. 2A and 2B, the plurality of first regions α and the second region β are formed along the surface 10a in the processed portion 16. The first regions α are arranged to be separated from each other and each of the first regions α is surrounded by the second region β when viewed from a direction orthogonal to the surface 10a. In other words, the plurality of first regions α are discretely formed along the surface 10a. "Discrete forming" means scattered forming.

The processed portion 16 includes the plastic deformation region R1 and the metal flow region R2. The plastic deformation region R1 and the metal flow region R2 are formed at the positions corresponding to the plurality of first regions α when viewed from a direction orthogonal to the surface 10a. The plastic deformation region R1 and the metal flow region R2 are included in the second region β. The plastic deformation region R1 and the metal flow region R2 surround the corresponding first region α. The metal flow region R2 surrounds the plastic deformation region R1 when viewed from a direction orthogonal to the surface 10a. The metal flow region R2 is formed around the plastic deformation region R1. The plastic deformation region R1 corresponding to each first region α is formed not to overlap the adjacent plastic deformation region R1. The metal flow region R2 corresponding to each first region α is formed to overlap the adjacent metal flow region R2.

The shortest distance of the adjacent first regions α is equal to or larger than, for example, (2π)^{1/2} times of the maximum width of the first region α. In this case, (N × S₂/S₁) < 0.5 is satisfied. Further, the shortest distance of the adjacent first regions α is smaller than, for example, 10 times of the maximum width of the first region α. In this case, it is possible to easily provide a configuration in which the adjacent plastic deformation regions R1 do not overlap each other and the adjacent metal flow regions R2 overlap each other.

In this embodiment, in the processed product 15, the first regions α are arranged in a matrix shape along the surface 10a when viewed from a direction orthogonal to the surface 10a. In this embodiment, the maximum width of the first region α is 1 mm, the shortest distance of the adjacent first regions α is 3 mm, and the plurality of first regions α are arranged at equal intervals. The "equal interval" includes a range of a manufacturing error. The distance between the adjacent first regions α means the distance between the centers of the first regions α.

The position and size of the first region α are the same as the position and size of the irradiation point P. Thus, the maximum width of the first region α is the same as the maximum width of the laser spot of the surface 10a. The shortest distance between the adjacent first regions α is the same as the shortest distance of the adjacent laser spots of the surface 10a. The sizes of the plastic deformation region R1 and the metal flow region R2 depend on the condition of the laser to irradiate the surface 10a. When the shortest distance of the adjacent laser spots of the surface 10a is smaller than 10 times of the maximum width of the laser spot, it is possible to easily provide a configuration in which the adjacent plastic deformation regions R1 do not overlap each other and the adjacent metal flow regions R2 overlap each other.

In a direction orthogonal to the surface 10a, the thickness of each first region α of the processed product 15 is equal to or smaller than, for example, the maximum value of the surface roughness of the surface 10a. In a direction orthogonal to the surface 10a, the maximum thickness of each first region α of the processed product 15 is equal to or smaller than, for example, 50 µm. In a direction orthogonal to the surface 10a, the maximum thickness of the second region β of the processed product 15 is larger than, for example, the maximum thickness of each first region α. For example, in a direction orthogonal to the surface 10a, the maximum thickness of the second region β of the processed product 15 is equal to or larger than 2 times of the maximum thickness of each first region α. For example, when the workpiece 10 made of titanium was irradiated with the laser beam L having an intensity of 60 GW/cm² at each irradiation point P, the thickness of each first region α of the processed product 15 was 50 µm and the thickness of each second region β of the processed product 15 was 500 µm in a direction orthogonal to the surface 10a.

In this embodiment, the residual stress value of the tensile residual stress of each first region α is equal to or smaller than the yield stress of the surface 10a of the workpiece 10. For example, when the workpiece 10 is made of titanium, the residual stress value of the tensile residual stress of each first region α is equal to or smaller than the yield stress of titanium.

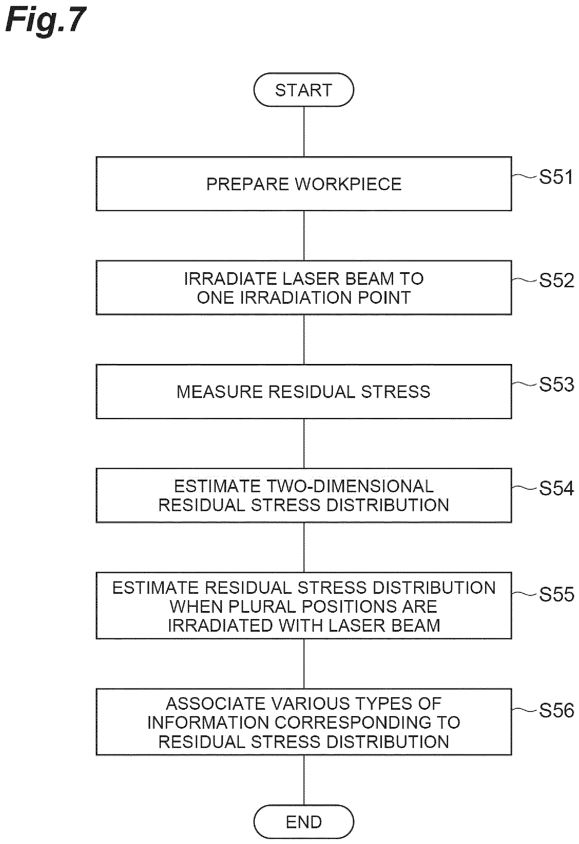

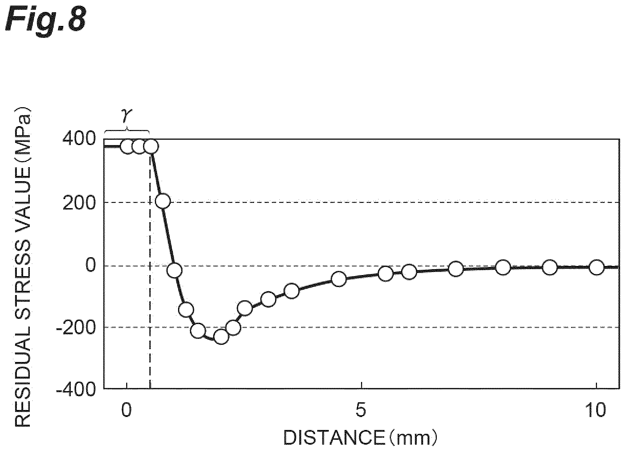

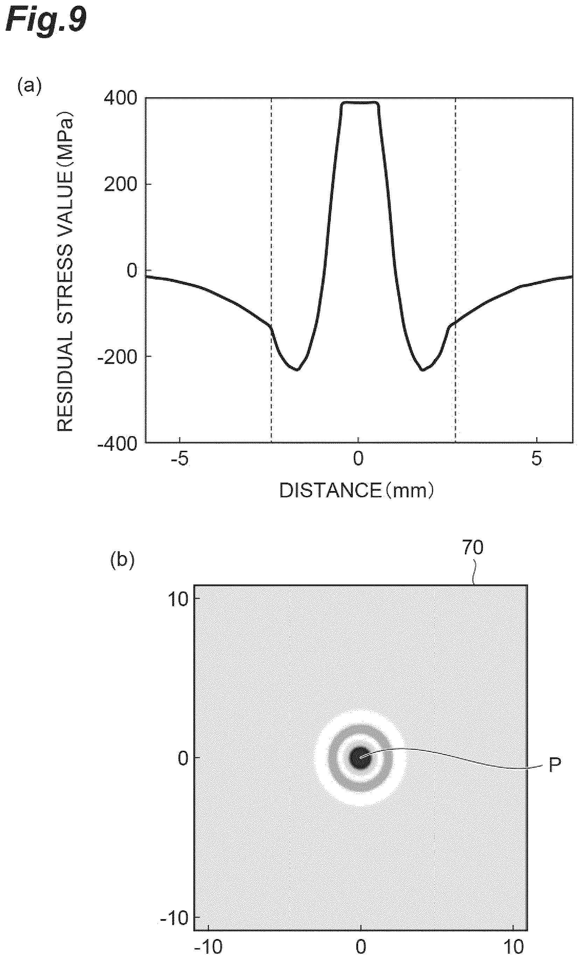

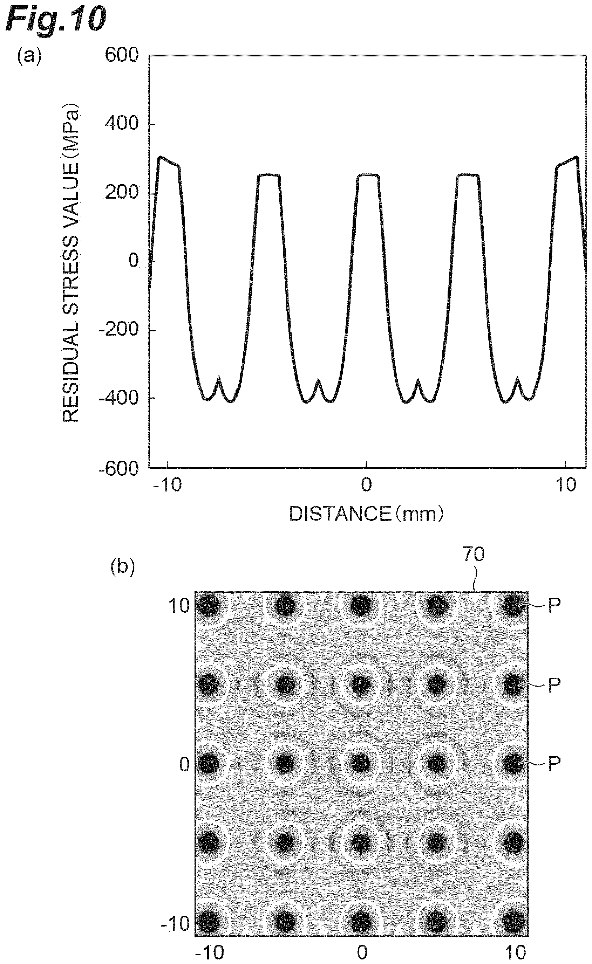

Next, an example of a method of creating a data set used in the laser peening process will be described with reference to FIGS. 7 to 10. In step S2, the determination unit 53 of the control unit 5 determines a parameter set by the laser emission unit 2 and the position adjustment unit 3, based on, for example, the data set stored in the storage unit 52 in advance and the information input by the user. FIG. 7 is a flowchart illustrating a method of creating a data set. FIG. 8 is a diagram illustrating the residual stress distribution when one irradiation point P of the workpiece is irradiated with the laser beam. FIGS. 9A and 9B are diagrams illustrating an estimated two-dimensional residual stress distribution. FIGS. 10A and 10B are diagrams illustrating a combined residual stress distribution. FIGS. 8, 9A, 9B, 10A, and 10B illustrate data when the workpiece is made of SUS304. Even in this case, the thermal conductivity of the workpiece is 20 W/m·K.

The data set include, for example, the material contained in the workpiece 10, the information on the residual stress distribution applied to the workpiece 10, and the information on the laser beam to irradiate the workpiece 10. In the data set, various types of information are associated with each other. In the data set, for example, the type of material of the workpiece, the compressive residual stress value applied to the processed product, the area of the unit region R5 for each irradiation, and the output energy of the laser beam emitted from the laser system 21 are associated with each other. In the data set, these types of information may be further associated with the information on the setting of the spatial light phase modulation unit 25 or the light diffraction unit 28. The information on the setting of the spatial light phase modulation unit 25 or the light diffraction unit 28 may include, for example, the information on the beam pattern of the laser beam emitted from the laser emission unit 2 or the information on the residual stress distribution formed in the unit region R5 for each irradiation. The created data set is stored in the storage unit 52 in advance. In this embodiment, the creation of the data set is separately performed before the processed product is manufactured.

First, a workpiece 70 is prepared (step S51). The workpiece 70 prepared in step S51 has the same structure as that of the workpiece 10 prepared in step S1. "Same structure" means a structure in which the same residual stress distribution is formed in the range of the manufacturing error when the laser beam of the same condition is irradiated. In step S51, a material contained in the workpiece 70 may be stored in the storage unit 52.

Next, one irradiation point is irradiated with the laser beam (step S52). In step S52, the irradiated laser beam has the same beam diameter and intensity as the laser beam L to irradiate one irradiation point P in step S3. "Beam diameter" means the beam diameter at the irradiation point of the surface 10a. In step S52, information on the laser beam to irradiate the workpiece 70 may be stored in the storage unit 52.

Next, the residual stress distribution is measured (step S53). The residual stress distribution is measured by the stress measurement unit 4. For example, the residual stress distribution is measured by an X-ray diffractometer. For example, the X-ray diffractometer measures the data of the residual stress value for each distance of 1/10 or less of the beam diameter of the irradiated laser beam. In FIG. 8, the measured data is plotted and the residual stress distribution measured in step S53 is illustrated. In the graph illustrated in FIG. 8, the horizontal axis indicates the distance from the center of the irradiation point P irradiated with the laser beam and the vertical axis indicates the residual stress value at each position. In FIG. 8, the region γ is a region of the irradiation point P irradiated with the laser beam in the surface 10a. In this embodiment, the residual stress distribution measured in step S53 is a distribution in a direction parallel to the surface 10a and is a distribution in one dimension.

In this embodiment, the plus residual stress value indicates the tensile residual stress and the minus residual stress value indicates the compressive residual stress. In FIG. 8, the tensile residual stress is applied to the plus position of the residual stress value and the compressive residual stress is applied to the minus position of the residual stress value. As illustrated in FIG. 8, the tensile residual stress is applied to the region γ irradiated with the laser beam and the compressive residual stress is applied to the periphery of the region γ. The size of the plastic deformation region R1 also depends on the yield stress of the workpiece.

Next, a two-dimensional residual stress distribution when one irradiation point P is irradiated with the laser beam is estimated based on the measurement result in step S53 (step S54). For example, as illustrated in FIG. 9A, the control unit 5 acquires reflection symmetry data with the axis passing through the center of the irradiation point P irradiated with the laser beam as the axis of symmetry in the residual stress distribution measured in step S53. Next, the control unit 5 acquires data rotated about the symmetry axis as a two-dimensional residual stress distribution. FIG. 9B illustrates a state in which the acquired two-dimensional residual stress distribution is viewed from a direction orthogonal to the surface 10a. In FIG. 9B, the residual stress distribution is illustrated by the color tone according to the value of the residual stress value. In this way, for example, the control unit 5 estimates and acquires the two-dimensional residual stress distribution when one irradiation point P is irradiated with the laser beam, based on the residual stress distribution measured in step S53.

Next, the residual stress distribution formed by the irradiation of the laser beam to the plurality of irradiation points P is estimated based on the estimation result in step S54 (step S55). For example, the residual stress distribution when the plurality of irradiation points P are irradiated with the laser beam is estimated by combining the two-dimensional residual stress distribution acquired in step S54. By adjusting the irradiation interval of the laser beam, the residual stress value of the second region β is adjusted. FIG. 10A illustrates an example of a state in which the residual stress distribution estimated in step S55 is viewed from a direction orthogonal to the surface 10a. In the residual stress distribution illustrated in FIG. 10A, the irradiation interval of the laser beam is set so that the region applied with a desired compressive residual stress value is widened. FIG. 10B is a graph illustrating the residual stress distribution designed in step S55. As illustrated in FIG. 8, in FIG. 10B, the horizontal axis indicates a distance from the center of the irradiation point P irradiated with the laser beam and the vertical axis indicates the residual stress value at each position. In step S55, the information on the estimated residual stress distribution may be stored in the storage unit 52.

Next, various types of information corresponding to the residual stress distribution estimated in step S55 are associated with each other (step S56). For example, the material contained in the workpiece 70, the output energy of the laser beam emitted from the laser emission unit 2, and the residual stress value of the residual stress distribution estimated in step S55 are associated with each other and are stored in the storage unit 52. The output energy of the laser beam emitted from the laser emission unit 2 is calculated from, for example, the intensity of the laser beam to irradiate the workpiece 70 in step S52, the number of the irradiation points P irradiated with the laser beam in the unit region R5, and the like.

By changing various conditions and repeating step S51 to step S56, the data set used in the laser peening process is created. Various conditions to be changed include, for example, the material contained in the workpiece 70, the output energy of the laser beam to irradiate the workpiece 70, and the irradiation interval of the laser beam adjusted in step S55. The created data set is stored in the storage unit 52 and is read by the acquisition unit 51 in step S3. For example, the acquisition unit 51 acquires the output energy of the laser beam associated with the information input in the data set when the user inputs the type of material of the workpiece 10, the applied compressive residual stress value, and the area of the unit region R5 for each irradiation.

In this embodiment, step S51 to step S56 are performed by external devices of the processing devices 1 and 1A. Step S52 described above may be performed by the laser emission unit 2 and the position adjustment unit 3 according to the instructions of the control unit 5. Step S53 described above may be performed by the stress measurement unit 4 according to the instructions of the control unit 5. Step S54 to step S56 described above may be performed by, for example, the control unit 5.

Next, the operations and effects of the processed product manufacturing method, the processed product, and the processing device described above will be described.

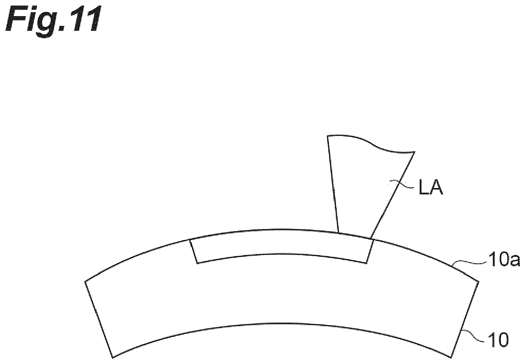

When performing the laser peening process, a metal flows occurs in the workpiece due to the irradiation of the laser beam LA. Due to the accumulation of the influence caused by the metal flow, there is concern that the workpiece 10 may be bent. FIG. 11 illustrates a state in which the workpiece 10 is bent due to the irradiation of the laser beam in the related art. Further, when the tensile residual stress is continuously applied to a relatively wide region by continuously emitting the laser beam, the strength of the surface 10a is reduced. For example, when the laser beam LA is irradiated along the surface 10a and the surface 10a is continuously irradiated, the regions applied with the tensile residual stress are continuously arranged. In this case, the strength of the surface 10a is reduced and deterioration over time is likely to occur.

In the above-described processed product manufacturing method, the first regions α applied with the tensile residual stress are formed to be separated from each other and to be surrounded by the second region β applied with the compressive residual stress when viewed from a direction orthogonal to the surface 10a. In this case, the surface strength can be improved by the compressive residual stress and the bending can be suppressed by the influence of the first region α applied with the tensile residual stress. Thus, it is possible to manufacture a processed product having improved surface strength and suppressing bending. In particular, when the processed product is a thin plate, bending can be significantly suppressed.

In the above-described manufacturing method, each irradiation point P is irradiated with the laser beam L so that the plastic deformation region R1 formed by the plastic deformation is formed at a position corresponding to each irradiation point P. The plastic deformation region R1 corresponding to each irradiation point P is formed not to overlap the adjacent plastic deformation region R1. When the plastic deformation region R1 does not overlap, the plastic deformation is suppressed compared to a case in which the plastic deformation region R1 overlaps and the deformation of the workpiece 10 in a direction along the surface 10a is also small. Thus, the bending of the processed product is further suppressed.

In the above-described manufacturing method, each irradiation point P is irradiated with the laser beam L so that the metal flow region R2 formed by the metal flow is formed at a position corresponding to each irradiation point P. The metal flow region R2 corresponding to each irradiation point P is irradiated to overlap the adjacent metal flow region R2. In this case, a metal flow occurs in the adjacent metal flow regions R2 in a facing direction. Therefore, distortion due to the metal flow interferes between the adjacent irradiation points P. As a result, the compressive residual stress between the adjacent irradiation points P is further improved and the energy of the laser beam L is suppressed. Further, since the interference of distortion at a position away from the irradiation point P is used, it is possible to widen and keep the region applied with the compressive residual stress and reducing the energy of the laser beam L to irradiate the workpiece. For example, the energy necessary for processing the entire surface 10a is reduced as compared to the case in which the laser beam L irradiates the entire surface 10a of the workpiece 10.

In the above-described manufacturing method, the plurality of irradiation points P are simultaneously irradiated with the laser beam L. In this case, a metal flow due to the irradiation of the laser beam L simultaneously occurs at a position corresponding to each irradiation point P. Since the metal flow simultaneously occurs in a facing direction in the adjacent metal flow regions R2, the compressive residual stress between the adjacent irradiation points P is further improved. Further, the influence due to the metal flow in each metal flow region R2 is canceled by the metal flow in the adjacent metal flow regions R2. Therefore, the bending of the processed product due to the metal flow is suppressed.

In the above-described manufacturing method, the workpiece 10 contains at least one of titanium and a titanium alloy. In this case, the thermal conductivity of the workpiece 10 is suppressed. For example, the thermal conductivity of the workpiece 10 can be suppressed to 20 W/m·K or less. As a result, the ratio of the size of the first region α applied with the tensile residual stress with respect to the second region β applied with the compressive residual stress is balanced. The thickness of the first region α in a direction orthogonal to the surface 10a is formed to be small compared to the case in which the workpiece 10 is made of a different material. Thus, the ratio of the size of the first region α with respect to the second region β is small compared to the case in which the workpiece 10 is formed of a different material.

In the processed product 15, the first regions α applied with the tensile residual stress are formed to be separated from each other and to be surrounded by the second region β applied with the compressive residual stress when viewed from a direction orthogonal to the surface. In this case, the surface strength can be improved by the compressive residual stress and the bending can be suppressed by the influence of the first region α applied with the tensile residual stress.

In the processed portion 16, the plastic deformation region R1 corresponding to each first region α is formed not to overlap the adjacent plastic deformation region R1. Therefore, a processed product having improved surface strength is easily provided.

In the processed portion 16, the metal flow region R2 corresponding to each first region α is formed to overlap the adjacent metal flow region R2. Therefore, a processed product having further improved compressive residual stress on a surface is provided.

In the processed product 15, the processed portion 16 contains at least one of titanium and a titanium alloy. In this case, the ratio of the first region α applied with the tensile residual stress with respect to the second region β applied with the compressive residual stress is balanced. As a result, a manufacturing cost can be reduced.

In the processing devices 1 and 1A, the control unit 5 controls at least one of the laser emission unit 2 and the position adjustment unit 3 so that the first regions α are separated from each other and each of the first regions α is surrounded by the second region β when viewed from a direction orthogonal to the surface 10a. In this case, the surface strength can be improved by the compressive residual stress and the bending can be suppressed by the influence of the first region α applied with the tensile residual stress.

In the processing devices 1 and 1A, the control unit 5 controls at least one of the laser emission unit 2 and the position adjustment unit 3 so that the plastic deformation region R1 is formed at a position corresponding to each irradiation point P by the plastic deformation due to the irradiation of the laser beam L to the plurality of irradiation points P and the plastic deformation region R1 corresponding to each irradiation point P does not overlap the adjacent plastic deformation region R1. In this case, the bending of the processed product is further suppressed.

In the processing devices 1 and 1A, the control unit 5 controls at least one of the laser emission unit 2 and the position adjustment unit 3 so that the metal flow region R2 is formed at a position corresponding to each irradiation point P by the metal flow due to the irradiation of the laser beam L to the plurality of irradiation points P and the metal flow region R2 corresponding to each irradiation point P overlaps the adjacent metal flow region R2. In this case, a metal flow occurs in a facing direction in the adjacent metal flow regions R2. Therefore, distortion due to the metal flow interferes between the adjacent irradiation points P. As a result, the compressive residual stress between the adjacent irradiation points P is further improved.

In the processing devices 1 and 1A, the control unit 5 controls at least one of the laser emission unit 2 and the position adjustment unit 3 so that the plurality of irradiation points P are simultaneously irradiated with the laser beam L. In this case, a metal flow due to the irradiation of the laser beam L simultaneously occurs at a position corresponding to each irradiation point P. Since the metal flow simultaneously occurs in a facing direction in the adjacent metal flow regions R2, the compressive residual stress between the adjacent irradiation points P is further improved. Further, the influence due to the metal flow in each metal flow region R2 is canceled by the metal flow in the adjacent metal flow regions R2. Therefore, the bending of the processed product due to the metal flow is suppressed.

In the processing devices 1 and 1A, the control unit 5 includes the acquisition unit 51 and the determination unit 53. The acquisition unit 51 acquires information on the residual stress distribution applied to the workpiece 10 by the irradiation of the laser beam L. The determination unit 53 determines the irradiation point P irradiated with the laser beam L, based on the information acquired by the acquisition unit 51. In this case, the processing devices 1 and 1A can perform the laser peening process according to the information set in advance. As a result, the processing devices 1 and 1A can easily provide a configuration in which the plurality of first regions α are separated from each other.

Although the embodiment and modified example of the present invention have been described above, the present invention is not necessarily limited to the above-described embodiment and modified example and can be modified into various forms without departing from the scope of the present invention.

For example, in the above-described embodiment and modified example, the parameter set to the laser emission unit 2 was set according to the instructions of the control unit 5. However, the parameter set to the laser emission unit 2 may be set in advance regardless of the instructions of the control unit 5 or may be set by the user. For example, the output energy of the laser beam emitted from the laser system 21 and the wavefront shape of the laser beam output from the spatial light phase modulation unit 25 may be set by the user.

In the above-described embodiment, the plurality of irradiation points P was simultaneously irradiated with the laser beam L. However, the plurality of irradiation points P may be sequentially irradiated with the laser beam L.

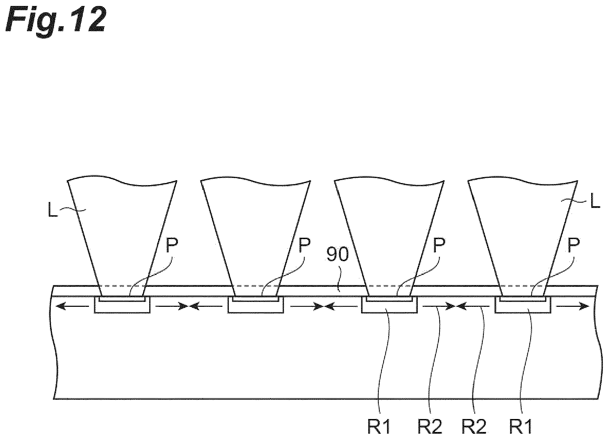

In the above-described embodiment, the surface 10a of the workpiece 10 is exposed and the surface 10a was directly irradiated with the laser beam L. As illustrated in FIG. 12, a sacrificial layer 90 may be formed on the surface 10a of the workpiece 10 and the laser beam L may be irradiated toward the surface 10a covered with the sacrificial layer 90. In other words, in step S1 and step S51, the workpiece in which the surface 10a is covered with the sacrificial layer 90 may be prepared. In this case, the amount of heat applied to the surface 10a is adjusted by the material and thickness of the sacrificial layer 90. As a result, the size of the first region α applied with the tensile residual stress can be adjusted regardless of the material of the workpiece 10.

The creation of the data set in the above-described embodiment and modified example was separately performed before the manufacturing of the processed product, but may be performed during the flow of the processed product manufacturing method. In this case, step S51 is the same as step S1. For example, step S52 to step S55 are performed between step S1 and step S2.

The material of the workpiece 10 may be titanium, titanium alloys, and metals other than SUS304. In this case, it is desirable to use a metal having thermal conductivity of 20 W/m·K or less as the material of the workpiece 10 in order to balance the ratio of the size of the first region α applied with the tensile residual stress with respect to the second region β applied with the compressive residual stress.

In the above-described embodiment and modified example, the first region α has a circular shape when viewed from a direction orthogonal to the surface 10a. However, the shape of the first region α is not limited thereto. For example, the first region α may be a rectangular shape when viewed from a direction orthogonal to the surface 10a.

In the above-described embodiment and modified example, the surface 10a was irradiated with the laser beam a plurality of times. However, the surface 10a may be irradiated with the laser beam once. Even in this case, the plurality of irradiation points P are simultaneously irradiated with the laser beam L.

### Reference Signs List

1, 1A: processing device, 2: laser emission unit, 3: position adjustment unit, 5: control unit, 10: workpiece, 10a: surface, 15: processed product, 16: processed portion, 51: acquisition unit, 53: determination unit, L: laser beam, P: irradiation point, R1: plastic deformation region, R2: metal flow region, α: first region, β: second region.

## Claims

1. A processed product manufacturing method comprising:
preparing a workpiece containing metal; and
forming along a surface of the workpiece a plurality of first regions applied with a tensile residual stress and a second region applied with a compressive residual stress by irradiating a plurality of irradiation points separated from each other in the surface with a laser beam,
wherein the first regions are formed to be separated from each other, and each of the first region is surrounded by the second region when viewed from a direction orthogonal to the surface.

2. The processed product manufacturing method according to claim 1,
wherein the irradiation points are irradiated with the laser beam so that a plastic deformation region formed by plastic deformation is formed at a position corresponding to each of the irradiation points, and
wherein the plastic deformation region corresponding to each of the irradiation points is formed not to overlap an adjacent plastic deformation region.

3. The processed product manufacturing method according to claim 1 or 2,
wherein the irradiation points are irradiated with the laser beam so that a metal flow region is formed at a position corresponding to each of irradiation points by a metal flow, and
wherein the metal flow region corresponding to each of the irradiation points is irradiated to overlap an adjacent metal flow region.

4. The processed product manufacturing method according to any one of claims 1 to 3,
wherein the irradiation points are simultaneously irradiated with the laser beam.

5. The processed product manufacturing method according to any one of claims 1 to 4,
wherein the workpiece contains at least one of titanium and a titanium alloy.

6. A processed product comprising:
a processed portion which contains metal and in which a plurality of first regions applied with a tensile residual stress and a second region applied with a compressive residual stress are formed along a surface, and
wherein the first regions are arranged to be separated from each other and each of the first regions is surrounded by the second region when viewed from a direction orthogonal to the surface.

7. The processed product according to claim 6,
wherein the processed portion includes plastic deformation regions formed at positions corresponding to the first regions by plastic deformation when viewed from a direction orthogonal to the surface, and
wherein the plastic deformation region corresponding to each of the first regions is formed not to overlap an adjacent plastic deformation region.

8. The processed product according to claim 6 or 7,
wherein the processed portion includes metal flow regions formed at positions corresponding to the first regions by a metal flow when viewed from a direction orthogonal to the surface, and
wherein the metal flow region corresponding to each first region is formed to overlap an adjacent metal flow region.

9. The processed product according to any one of claims 6 to 8,
wherein the processed portion contains at least one of titanium and a titanium alloy.

10. A processing device comprising:
a laser emission unit configured to emit a laser beam to irradiate a surface of a workpiece containing metal;
a position adjustment unit configured to adjust a position of the laser beam with respect to the surface; and
a control unit configured to control at least one of the laser emission unit and the position adjustment unit so that a plurality of first regions applied with a tensile residual stress and a second region applied with a compressive residual stress are formed along the surface by irradiating a plurality of irradiation points separated from each other in the surface with the laser beam,
wherein the control unit is configured to control at least one of the laser emission unit and the position adjustment unit so that the first regions are separated from each other and each of the first regions is surrounded by the second region when viewed from a direction orthogonal to the surface.

11. The processing device according to claim 10,
wherein the control unit is configured to control at least one of the laser emission unit and the position adjustment unit so that a plastic deformation region is formed at a position corresponding to each of the irradiation points by plastic deformation due to the irradiation of the laser beam to the irradiation points and the plastic deformation region corresponding to each irradiation point does not overlap an adjacent plastic deformation region.

12. The processing device according to claim 10 or 11,
wherein the control unit is configured to control at least one of the laser emission unit and the position adjustment unit so that a metal flow region is formed at a position corresponding to each of the irradiation points by a metal flow due to the irradiation of the laser beam to the irradiation points and the metal flow region corresponding to each of the irradiation points overlaps an adjacent metal flow region.

13. The processing device according to any one of claims 10 to 12,
wherein the control unit is configured to control at least one of the laser emission unit and the position adjustment unit so that the irradiation points are simultaneously irradiated with the laser beam.

14. The processing device according to any one of claims 10 to 13,
wherein the control unit includes an acquisition unit configured to acquire information on a residual stress distribution applied to the workpiece by the irradiation of the laser beam, and a determination unit configured to determine, based on the information acquired by the acquisition unit, an irradiation point irradiated with the laser beam.
